# EUROPEAN PATENT APPLICATION

(11) **EP 4 496 411 A1**
(43) Date of publication of application: **22.01.2025**
(21) Application number: 22931297.0
(22) Date of filing: 14.03.2022
(51) Int. Cl.: H04W 72/12

(54) **METHOD FOR REQUESTING SYSTEM INFORMATION AND APPARATUS THEREOF**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/080726
(87) International publication number: WO 2023/173257

(57) **Abstract**

Disclosed in embodiments of the present disclosure are a method for requesting system information and an apparatus thereof, which can be applied to the technical field of communications. The method executed by a remote terminal device comprises: in response to no valid system information being stored in the remote terminal device, sending a system information request message, the request message carrying a requested system information identifier. When determining that no valid system information is stored, the remote terminal device can send the system information request message containing the required system information identifier to obtain valid system information, and performs communication on the basis of the obtained valid system information, thereby improving the communication reliability of the remote terminal device.

## Description

### TECHNICAL FIELD

The present disclosure relates to the field of communication technology, and in particular to a method and an apparatus for requesting system information.

### BACKGROUND

In a communication system, if no valid system information is stored in a terminal device in a connected state, when the terminal device is on a bandwidth part (BWP) that is not configured with a common search space for searching for other system information, the terminal device may send a radio resource control (RRC) message for requesting the system information to a network device; or when the terminal device is on a BWP that is configured with the common search space searching for other system information, but the system information required by the terminal device is not broadcasted by a network device, the terminal device may also send the RRC message for requesting the system information to the network device.

For a remote terminal device in the connected state that is not on the BWP configured with the common search space, how to request system information is an urgent problem to be solved.

### SUMMARY

A method and an apparatus for requesting system information are provided in the embodiments of the present disclosure. A remote terminal device may send a system information request message including a requested system information identifier to obtain valid system information when determining that no valid system information is stored, and then performs communication based on the obtained valid system information, to improve reliability of the communication of the remote terminal device.

According to a first aspect of the embodiments of the present disclosure, a method for requesting system information, performed by a remote terminal device, is provided. The method includes: sending a system information request message in response to no valid system information being stored in the remote terminal device, in which the system information request message carries a requested system information identifier.

In the present disclosure, the remote terminal device may send the system information request message including the requested system information identifier to obtain the valid system information when determining that no valid system information is stored, and then performs communication based on the obtained valid system information, to improve reliability of the communication of the remote terminal device.

According to a second aspect of the embodiments of the present disclosure, another method for requesting system information, performed by a relay terminal device, is provided. The method includes: receiving a system information request message sent by a remote terminal device, in which the system information request message carries a requested system information identifier.

In the present disclosure, the relay terminal device may receive the system information request message sent by the remote terminal device, to provide the demanded system information to the remote terminal device, so that the remote terminal device may perform communication based on the obtained valid system information, thus improving reliability of the communication of the remote terminal device.

According to a third aspect of the embodiments of the present disclosure, another method for requesting system information, performed by a network device, is provided. The method includes: receiving a system information request message sent by a remote terminal device, in which the system information request message carries a requested system information identifier.

In the present disclosure, the network device may receive the system information request message sent by the remote terminal device, to provide the demanded system information to the remote terminal device, so that the remote terminal device may perform communication based on the obtained valid system information, thus improving reliability of the communication of the remote terminal device.

According to a fourth aspect of the embodiments of the present disclosure, a communication apparatus, applied on a remote terminal device side, is provided. The communication apparatus includes: a transceiver module, configured to send a system information request message, in which the system information request message carries a requested system information identifier of a terminal device, and no valid system information is stored in the terminal device.

According to a fifth aspect of the embodiments of the present disclosure, a communication apparatus, applied on a relay terminal device side, is provided. The communication apparatus includes: a transceiver module, configured to receive a system information request message sent by a remote terminal device, in which the system information request message carries a requested system information identifier.

According to a sixth aspect of the embodiments of the present disclosure, a communication apparatus, applied on a network device side, is provided. The communication apparatus includes: a transceiver module, configured to receive a system information request message sent by a remote terminal device, in which the system information request message carries a requested system information identifier.

According to a seventh aspect of the embodiments of the present disclosure, a communication apparatus is provided. The communication apparatus includes a processor, and when a computer program stored in a memory is executed by the processor, the method described in the first aspect is implemented.

According to an eighth aspect of the embodiments of the present disclosure, a communication apparatus is provided. The communication apparatus includes a processor, and when a computer program stored in a memory is executed by the processor, the method described in the second aspect is implemented.

According to a ninth aspect of the embodiments of the present disclosure, a communication apparatus is provided. The communication apparatus includes a processor, and when a computer program stored in a memory is executed by the processor, the method described in the third aspect is implemented.

According to a tenth aspect of the embodiments of the present disclosure, a communication apparatus is provided. The communication apparatus includes a processor and a memory. The memory stores a computer program, and the computer program is executed by the processor, to cause the communication apparatus to perform the method described in the first aspect.

According to an eleventh aspect of the embodiments of the present disclosure, a communication apparatus is provided. The communication apparatus includes a processor and a memory. The memory stores a computer program, and the computer program is executed by the processor, to cause the communication apparatus to perform the method described in the second aspect.

According to a twelfth aspect of the embodiments of the present disclosure, a communication apparatus is provided. The communication apparatus includes a processor and a memory. The memory stores a computer program, and the computer program is executed by the processor, to cause the communication apparatus to perform the method described in the third aspect.

According to a thirteenth aspect of the embodiments of the present disclosure, a communication apparatus is provided. The apparatus includes a processor and an interface circuit. The interface circuit is configured to receive and transmit a code instruction to the processor, and the processor is configured to execute the code instruction to cause the apparatus to perform the method described in the first aspect.

According to a fourteenth aspect of the embodiments of the present disclosure, a communication apparatus is provided. The apparatus includes a processor and an interface circuit. The interface circuit is configured to receive and transmit a code instruction to the processor, and the processor is configured to execute the code instruction to cause the apparatus to perform the method described in the second aspect.

According to a fifteenth aspect of the embodiments of the present disclosure, a communication apparatus is provided. The apparatus includes a processor and an interface circuit. The interface circuit is configured to receive and transmit a code instruction to the processor, and the processor is configured to execute the code instruction to cause the apparatus to perform the method described in the third aspect.

According to a sixteenth aspect of the embodiments of the present disclosure, a system for requesting system information is provided. The system includes the communication apparatus described in the fourth aspect to the sixth aspect. Or, the system includes the communication apparatus described in the seventh aspect to the ninth aspect. Or, the system includes the communication apparatus described in the tenth aspect to the twelfth aspect. Or, the system includes the communication apparatus described in the thirteenth aspect to the fifteenth aspect.

According to a seventeenth aspect of the embodiments of the present disclosure, a computer-readable storage medium is provided. The computer-readable storage medium is configured to store instructions that are used by the terminal device, when the instructions are executed, the terminal device is caused to perform the method described in the first aspect.

According to an eighteenth aspect of the embodiments of the present disclosure, a readable storage medium is provided. The readable storage medium is configured to store instructions that are used by the network device, when the instructions are executed, the network device is caused to perform the method described in the second aspect.

According to a nineteenth aspect of the embodiments of the present disclosure, a readable storage medium is provided. The readable storage medium is configured to store instructions that are used by the network device, when the instructions are executed, the network device is caused to perform the method described in the third aspect.

According to a twentieth aspect of the embodiments of the present disclosure, a computer program product is provided. The computer program product includes a computer program which, when executed on a computer, causes the computer to perform the method described in the first aspect.

According to a twenty-first aspect of the embodiments of the present disclosure, a computer program product is provided. The computer program product includes a computer program which, when executed on a computer, causes the computer to perform the method described in the second aspect.

According to a twenty-second aspect of the embodiments of the present disclosure, a computer program product is provided. The computer program product includes a computer program which, when executed on a computer, causes the computer to perform the method described in the third aspect.

According to a twenty-third aspect of the embodiments of the present disclosure, a chip system is provided. The chip system includes at least one processor and an interface, to support the terminal device in implementing the functions involved in the first aspect, for example, determining or processing at least one of data or information involved in the method described above. In one possible design, the chip system further includes a memory, in which the memory is configured to store a computer program and data necessary for the terminal device. The chip system may be composed of chips or may be composed of chips and other discrete devices.

According to a twenty-third aspect of the embodiments of the present disclosure, a chip system is provided. The chip system includes at least one processor and an interface, to support the network device in implementing the functions involved in the second aspect, for example, determining or processing at least one of data or information involved in the method described above. In one possible design, the chip system further includes a memory, in which the memory is configured to store a computer program and data necessary for the network device. The chip system may be composed of chips or may be composed of chips and other discrete devices.

According to a twenty-fourth aspect of the embodiments of the present disclosure, a chip system is provided. The chip system includes at least one processor and an interface, to support the network device in implementing the functions involved in the third aspect, for example, determining or processing at least one of data or information involved in the method described above. In one possible design, the chip system further includes a memory, in which the memory is configured to store a computer program and data necessary for the network device. The chip system may be composed of chips or may be composed of chips and other discrete devices.

According to a twenty-fifth aspect of the embodiments of the present disclosure, a computer program is provided, in which when the computer program is executed on a computer, the computer is caused to perform the method described in the first aspect.

According to a twenty-sixth aspect of the embodiments of the present disclosure, a computer program is provided, in which when the computer program is executed on a computer, the computer is caused to perform the method described in the second aspect.

According to a twenty-seventh aspect of the embodiments of the present disclosure, a computer program is provided, in which when the computer program is executed on a computer, the computer is caused to perform the method described in the third aspect.

### BRIEF DESCRIPTION OF THE DRAWINGS

In order to more clearly illustrate the technical solutions of the embodiments of the disclosure, the drawings required for use in the description of the embodiments of the disclosure may be briefly introduced below.
FIG. 1 is a schematic diagram illustrating an architecture of a communication system according to an embodiment of the present disclosure.
FIG. 2 is a flowchart illustrating a method for requesting system information according to an embodiment of the present disclosure.
FIG. 3 is a flowchart illustrating another method for requesting system information according to an embodiment of the present disclosure.
FIG. 4 is a flowchart illustrating another method for requesting system information according to an embodiment of the present disclosure.
FIG. 5 is a flowchart illustrating another method for requesting system information according to an embodiment of the present disclosure.
FIG. 6 is a flowchart illustrating another method for requesting system information according to an embodiment of the present disclosure.
FIG. 7 is a block diagram illustrating a communication apparatus according to an embodiment of the present disclosure.
FIG. 8 is a block diagram illustrating another communication apparatus according to an embodiment of the present disclosure.
FIG. 9 is a block diagram illustrating a chip according to an embodiment of the present disclosure.

### DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of devices and methods consistent with aspects of the embodiments of the disclosure as recited in the appended claims.

For ease of understanding, the terms involved in the present disclosure are first introduced.

### 1, Remote terminal device

A remote terminal device refers to a terminal device that is not directly connected to a network device, but is connected to the network device via another terminal device or another relay terminal device.

### 2, Relay terminal device

A relay terminal device refers to a device that provides a relay function for a remote terminal device.

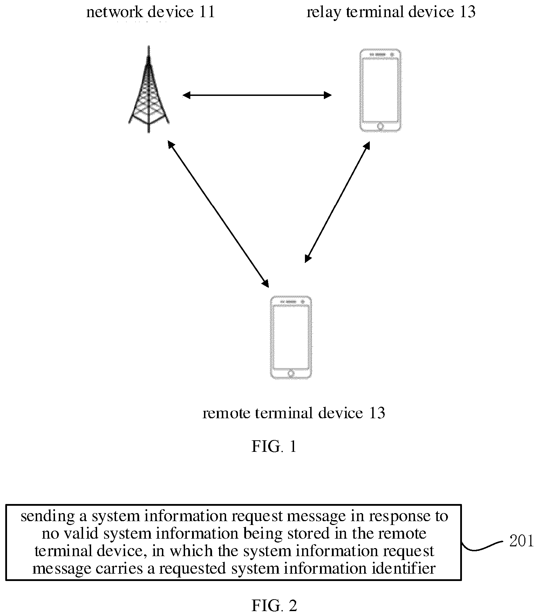

Referring to FIG. 1, FIG. 1 shows a schematic diagram illustrating an architecture of a communication system according to an embodiment of the present disclosure. The communication system may include, but is not limited to, one network device and one terminal device. And the number and form of the devices illustrated in FIG. 1 are illustrative only and do not constitute a limitation of the embodiments of the present disclosure. In a practical application, two or more network devices, or two or more terminal devices may be included. The communication system shown in FIG. 1 is exemplified by including one network device 11, one remote terminal device 12, and one relay terminal device 13.

It should be noted that the technical solutions of the embodiments of the present disclosure may be applied to various communication systems. For example, the technical solutions may be applied to a long term evolution (LTE) system, a 5th generation (5G) mobile communication system, a 5G new radio (NR) system, or other future new mobile communication systems.

The network device 11 in the embodiments of the present disclosure is an entity on a network side for transmitting or receiving a signal. For example, the network device 11 may be an evolved NodeB (eNB), a transmission reception point (TRP), a next generation NodeB (gNB) in the NR system, a base station in other future mobile communication systems, or an access point in a wireless fidelity (WiFi) systems, etc. The specific technology and the specific form of the device adopted for the network device are not limited in the embodiments of the present disclosure. The network device provided in the embodiments of the present disclosure may be composed of a central unit (CU) and a distributed unit (DU). The CU may also be referred to as a control unit. The CU-DU structure may be configured to split the protocol layer of a network device, such as a base station. Some functions of the protocol layer are centrally controlled in the CU, and the remaining part or all of the functions of the protocol layer that are distributed in the DU, in which the DU is centrally controlled by the CU.

The remote terminal device 12 and the relay terminal device 13 in the embodiments of the present disclosure may be entities on the user side for receiving or transmitting signals, such as mobile phones. The terminal device may also be referred to as a terminal, a user equipment (UE), a mobile station (MS), a mobile terminal (MT), etc. The terminal device may also be a car with communication functions, an intelligent car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, and a wireless terminal device in transportation safety, a wireless terminal device in smart city, a wireless terminal device in smart home, etc. The specific technology and the specific form of the device adopted for the terminal device are not limited in the embodiments of the present disclosure.

It may be understood that the communication system described in the embodiments of the present disclosure is provided to illustrate the technical solutions of the embodiments of the present disclosure more clearly, and does not constitute a limitation of the technical solutions provided by the embodiments of the present disclosure. It is known to a person of ordinary skill in the art that with the evolution of the system architecture and the emergence of new business scenarios, the technical solutions provided in the embodiments of the present disclosure are equally applicable to similar technical problems.

Referring to FIG. 2, FIG. 2 is a flowchart illustrating a method for requesting system information according to an embodiment of the present disclosure. The method is performed by a remote terminal device. As shown in FIG. 2, the method includes, but is not limited to, the following step 201.

At step 201, a system information request message is sent in response to no valid system information being stored in the remote terminal device, in which the system information request message carries a requested system information identifier.

In general, if the remote terminal device finds that necessary information required for cell access is not stored locally during cell selection or access, it can be determined that no valid system information (for example, system information block, SIB) is stored locally. For example, the necessary information may include a valid system frame number, subcarrier interval, etc.,

Optionally, no valid system information being stored may indicate that no SIB is stored in the remote terminal device, or a version number of the stored SIB is different from a version number of the SIB in the broadcast message, i.e., the remote terminal device cannot perform communication, which is not limited in the present disclosure.

Optionally, the system information identifier may be any identification information that may uniquely identify the requested SIB. For example, the system information identifier may be an SIB 1, an SIB2, etc., which is not limited in the present disclosure.

In the present disclosure, if a remote terminal device in a connected state determines that no valid SIB is stored in its system, the remote terminal device may send the system information request message to the network device, or send the system information request message to the network device through a relay terminal device.

Optionally, if the remote terminal device sends the system information request message to the network device, the system information request message may be a radio resource control (RRC) message for requesting the system information. For example, the system information request message may be a dedicated SIB request message.

Optionally, if the remote terminal device sends the system information request message to the network device through the relay terminal device, the system information request message may be a sidelink RRC message. For example, a remote UE information sidelink message that includes the requested system information identifier may be sent to the relay terminal device by the remote terminal device, to request the relay terminal device to forward the demanded system information for the remote terminal device.

In the present disclosure, the remote terminal device may send the system information request message if it determines that no valid SIB is stored in its system, to obtain the demanded system information, and performs communication based on the obtained valid system information, so that reliability of the communication of the remote terminal device may be improved.

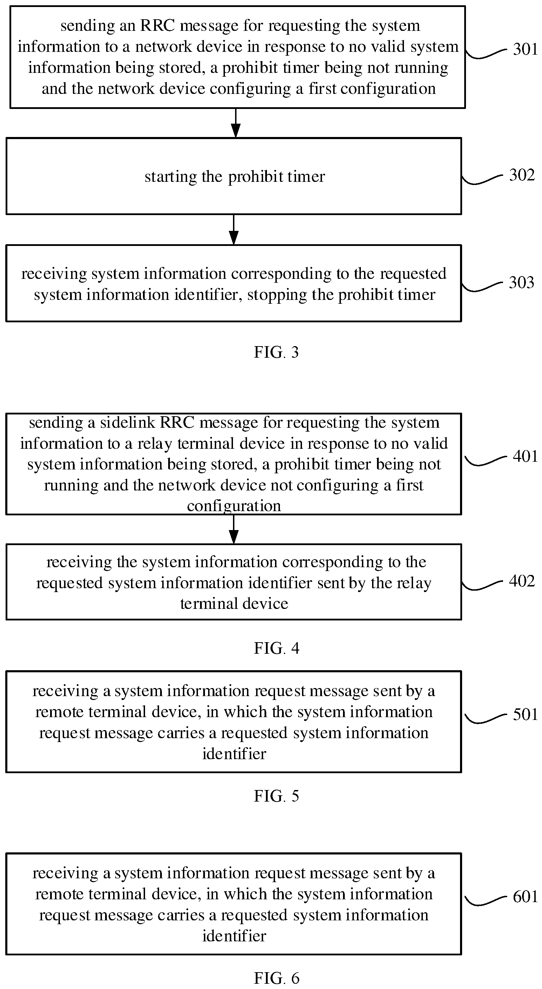

Referring to FIG. 3, FIG. 3 is a flowchart illustrating a method for requesting system information according to an embodiment of the present disclosure. The method is performed by a remote terminal device. As shown in FIG. 3, the method includes, but is not limited to, the following steps 301 to 303.

At step 301, an RRC message for requesting the system information is sent to a network device in response to no valid system information being stored, a prohibit timer being not running and the network device configuring a first configuration.

The first configuration is an on-demand system information request configuration (e.g., onDemandSIBRequest). In addition, the on-demand system information request configuration may include a time duration for the prohibit timer. The prohibit timer may be controlled by the remote terminal device based on the time duration in the on-demand system information request configuration.

At step 302, the prohibit timer is started.

In general, the prohibit timer is started by the terminal device after the terminal device sends the RRC message for requesting the system information, and the RRC message for requesting the system information may not be sent again during the running of the prohibit timer. Thus, in the present disclosure, the remote terminal device may determine that the RRC message for requesting the system information may be sent currently in a case that the remote terminal device determines that no valid system information is stored and the prohibit timer is not running. In this case, if the network device configures the first configuration, i.e., the on-demand system information request configuration is acquired, the RRC message for requesting the system information may be sent to the network device to request the demanded system information from the network device.

Optionally, the prohibit timer may be a T350 timer.

Optionally, the remote terminal device may send a dedicatedSIBRequest message directly to the network device to request the demanded system information, or the remote terminal device may send the dedicatedSIBRequest message to the network device through the relay terminal device to request the demanded system information, or the remote terminal device may send a RemoteUEInformationSidelink message to the relay terminal device, to request the relay terminal device to forward the demanded system information for the remote terminal device, which is not limited in the present disclosure.

Optionally, the remote terminal device may obtain the first configuration described above through an RRC reconfiguration message. In the present disclosure, the remote terminal device may receive the RRC reconfiguration message sent by the network device, in which the RRC reconfiguration message carries the first configuration.

In addition, in order to avoid resource waste caused by sending the RRC message for requesting the system information repeatedly by the remote terminal device, the prohibit timer may be started by the remote terminal device after the RRC message for requesting the system information is sent to the network device, and no RRC message for requesting the system information is sent again during the running of the prohibit timer.

At step 303, system information corresponding to the requested system information identifier is received, and the prohibit timer is stopped.

In the present disclosure, the prohibit timer may be stopped after the requested system information is received by the remote terminal device, so that a new RRC message for requesting the system information may be sent in time in a case that another system information is needed by the terminal device. The delay in sending the new RRC message for requesting the system information due to the prohibit timer not being stopped in time is avoided.

Optionally, the remote terminal device may receive the system information corresponding to the system information identifier in an RRC reconfiguration message, or in a system broadcast message, or in a sidelink RRC message, which is not limited in the present disclosure. The cell selection or access may be performed by the terminal device based on the received system information after the demanded system information is received.

In the present disclosure, the remote terminal device may send the RRC message for requesting the system information to the network device in response to determining that no valid SIB is stored in its system, the prohibit timer being not running and the network device configuring the first configuration, to obtain the demanded system information, and performs communication based on the obtained valid system information, so that reliability of the communication of the remote terminal device may be improved.

Referring to FIG. 4, FIG. 4 is a flowchart illustrating a method for requesting system information according to an embodiment of the present disclosure. The method is performed by a remote terminal device. As shown in FIG. 4, the method includes, but is not limited to, the following steps 401 to 402.

At step 401, a sidelink RRC message for requesting the system information is sent to a relay terminal device in response to no valid system information being stored, a prohibit timer being not running and a network device not configuring with a first configuration.

In the present disclosure, the remote terminal device cannot send the RRC message for requesting the system information to the network device based on the first configuration if the network device does not configure the first configuration. In this case, the remote terminal device may send the sidelink RRC message for requesting the system information to the relay terminal device when determining that no valid system information is stored.

At step 402, system information corresponding to a system information identifier sent by the relay terminal device is received.

Optionally, the relay terminal device may send the received system information to the remote terminal device through the sidelink RRC message after the relay terminal device receives the demanded system information of the remote terminal device. For example, the remote terminal device may receive the system information corresponding to the system information identifier sent by the relay terminal device through a network information transfer sidelink message (Uu message transfer sidelink).

In the present disclosure, the remote terminal device may send the sidelink RRC message for requesting the system information to the relay terminal device in response to determining that no valid SIB is stored in its system and the network device not configuring the first configuration, to obtain the demanded system information, to perform communication based on the obtained valid system information, so that reliability of the communication of the remote terminal device may be improved.

Referring to FIG. 5, FIG. 5 is a flowchart illustrating a method for requesting system information according to an embodiment of the present disclosure. The method is performed by a relay terminal device. As shown in FIG. 5, the method includes, but is not limited to, the following step 501.

At step 501, a system information request message sent by a remote terminal device is received, in which the system information request message carries a requested system information identifier.

Optionally, the relay terminal device may receive the system information request message sent by the remote terminal device through a sidelink RRC message, e.g., a remote UE information sidelink message.

Regarding the type and implementation form of the system information identifier, reference may be made to the detailed description of any embodiment of the present disclosure, which will not be repeated herein.

Optionally, the relay terminal device may determine whether the system information corresponding to the system information identifier is included locally after receiving the system information request message sent by the remote terminal device. If the system information corresponding to the system information identifier is included locally, the system information corresponding to the system information identifier may be returned to the remote terminal device.

Optionally, if the relay terminal device determines that the system information corresponding to the system information identifier is not included locally, the relay terminal device may request the system information corresponding to the system information identifier from the network device. For example, the relay terminal device may be request the demanded system information through a dedicatedSIBRequest message. The relay terminal device may return the received system information to the remote terminal device after receiving the system information corresponding to the system information identifier. The relay terminal device may receive the system information corresponding to the system information identifier in an RRC reconfiguration message, or in a system broadcast message, or in a sidelink RRC message, which it is not limited in the present disclosure.

Optionally, the relay terminal device may send the obtained system information corresponding to the system information identifier to the remote terminal device through a sidelink RRC message. For example, the relay terminal device may send the received system information corresponding to the system information identifier to the remote terminal device through the Uu Message Transfer sidelink.

In the present disclosure, the relay terminal device may forward the system information request message for the remote terminal device based on the demand of the remote terminal device, to cause the remote terminal device to obtain the demand system information, and to perform communication based on the obtained valid system information, so that reliability of the communication of the remote terminal device may be improved.

Referring to FIG. 6, FIG. 6 is a flowchart illustrating a method for requesting system information according to an embodiment of the present disclosure. The method is performed by a network device. As shown in FIG. 6, the method includes, but is not limited to, the following step 601.

At step 601, a system information request message sent by a remote terminal device is received, in which the system information request message carries a requested system information identifier.

Optionally, the network device may receive the system information request sent by the remote terminal device through the RRC message for requesting the system information, e.g., a dedicatedSIBRequest message.

Regarding the type and implementation form of the system information identifier, reference may made to the detailed description of any embodiment of the present disclosure, which will not be repeated herein.

In addition, the RRC message for requesting the system information may be sent to the network device by the remote terminal device only if a system information request configuration (i.e., a first configuration) is received by the remote terminal device. Thus, in the present disclosure, the network device may also send an RRC reconfiguration message to the remote terminal device, in which the RRC reconfiguration message carries the first configuration for requesting the system information.

Optionally, the first configuration may be an on demand SIB request, which is not limited in the present disclosure.

Optionally, the network device may send system information corresponding to the system information identifier to the remote terminal device through an RRC reconfiguration message. Or, the network device may broadcast system information corresponding to the system information identifier through a broadcast message. Then, the cell selection or access may be performed by the remote terminal device based on the obtained system information.

In the present disclosure, the network device may receive the system information request message sent by the remote terminal device to provide the demanded system information to the remote terminal device, so that the remote terminal device performs communication based on the obtained valid system information. The reliability of the communication of the remote terminal device may be improved.

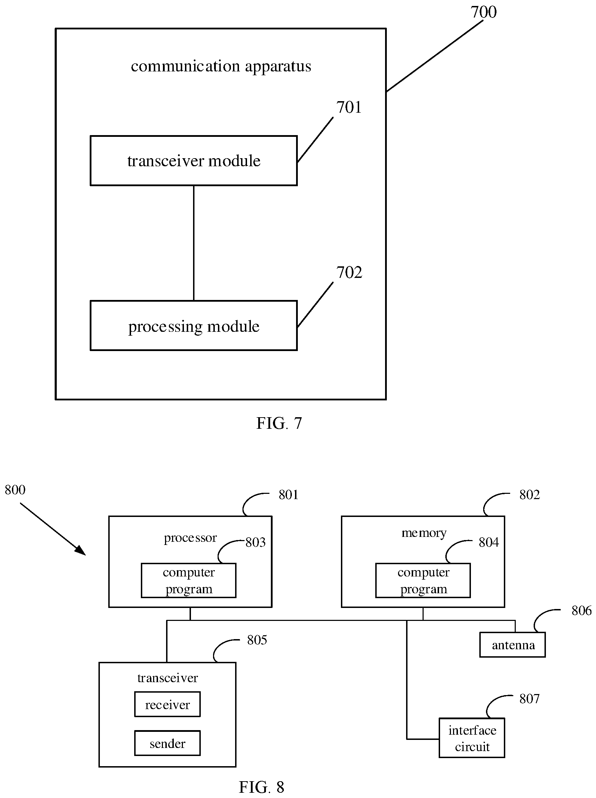

Referring to FIG. 7, FIG. 7 is a block diagram illustrating a communication apparatus 700 according to an embodiment of the present disclosure. The communication apparatus 700 shown in FIG. 7 may include a transceiver module 701 and a processing module 702. The transceiver module 701 may include a sending module and/or a receiving module. The sending module is configured to implement a sending function. The receiving module is configured to implement a receiving function. The transceiver module 701 may implement the sending function and/or the receiving function.

It may be understood that the communication apparatus 700 may be a remote terminal device, or an apparatus in the remote terminal device, or an apparatus that may be used in combination with the remote terminal device.

The communication apparatus 700 is applied on the network device side, the transceiver module 701 is specifically configured to send a system information request message, in which the system information request message carries a requested system information identifier of a terminal device, and no valid system information is stored in the terminal device.

Optionally, the transceiver module 701 is specifically configured to send an RRC message for requesting the system information to the network device in response to a prohibit timer being not running and the network device configuring a first configuration, in which the first configuration is an on-demand system information request configuration.

The processing module 702 is configured to start the prohibit timer.

Optionally, the transceiver module 701 is specifically configured to receive an RRC reconfiguration message sent by the network device, in which the RRC reconfiguration message carries the first configuration.

Optionally, the processing module 702 is further configured to receive system information corresponding to the requested system information identifier in an RRC reconfiguration message, and stop the prohibit timer; or receive system information corresponding to the requested system information identifier in a system broadcast message, and stop the prohibit timer; or receive system information corresponding to the requested system information identifier in a sidelink RRC message, and stop the prohibit timer.

Optionally, the transceiver module 701 is specifically configured to: send a sidelink RRC message for requesting the system information to a relay terminal device in a case that the network device does not configures the first configuration.

It may be understood that the communication apparatus 700 may be a relay terminal device, an apparatus in the relay terminal device, or an apparatus that may be used in combination with the relay terminal device.

The communication apparatus 700 is applied on the relay terminal device side, the transceiver module 701 is configured to receive a system information request message sent by a remote terminal device, in which the system information request message carries a requested system information identifier.

Optionally, the transceiver module 701 is further configured to send obtained system information corresponding to the requested system information identifier to the remote terminal device through a sidelink RRC message.

It may be understood that the communication apparatus 700 may be a network device, an apparatus in the network device, or an apparatus that may be used in combination with the network device.

The communication apparatus 700 is applied on the network device side, the transceiver module 701 is configured to receive a system information request message sent by a remote terminal device, in which the system information request message carries a requested system information identifier.

Optionally, the transceiver module is further configured to send an RRC reconfiguration message to the remote terminal device, in which the RRC reconfiguration message carries a first configuration for requesting the system information.

Optionally, the transceiver module 701 is further configured to send system information corresponding to the requested system information identifier to the remote terminal device through an RRC reconfiguration message; or, broadcast system information corresponding to the requested system information identifier through a broadcast message.

In the present disclosure, the remote terminal device may send the system information request message to obtain the demanded system information when determining that no valid SIB is stored in its system, to perform communication based on the obtained valid system information, so that reliability of the communication of the remote terminal device may be improved.

Referring to FIG. 8, FIG. 8 is a block diagram illustrating another communication apparatus according to an embodiment of the present disclosure. The communication apparatus 800 may be a network device, or a remote terminal device, or a relay terminal device. Or the communication apparatus may also be a chip, a chip system, or a processor etc. that is configured to support the network device in implementing the method described above. Or the communication apparatus may also be a chip, a chip system, or a processor etc. that is configured to support the terminal device in implementing the method described above. The apparatus may be configured to implement the methods described in the above embodiments of the present disclosure, which is illustrated in the method embodiments of the present disclosure.

The communication apparatus 800 may include one or more processors 801. The processors 801 may be a general purpose processor or a dedicated processor. For example, the processor may be a baseband processor or a central processor. The baseband processor may be configured to process the communication protocol and the communication data. The central processor may be configured to control the communication apparatus (e.g., a base station, a baseband chip, a terminal device, a terminal device chip, a DU or a CU, etc.), execute a computer program, and process data of the computer program.

Optionally, the communication apparatus 800 may further include one or more memories 802 in which the memory stores a computer program 804, and the computer program 804 is executed by the processor 801, to cause the communication apparatus 800 to perform the method described in the above embodiments of the present disclosure. Optionally, the memory 802 may also store the data. The communication apparatus 800 and the memory 802 may be provided separately or may be integrated together.

Optionally, the communication apparatus 800 may also include a transceiver 805 and an antenna 806. The transceiver 805 may be referred to as a transceiver unit, a transceiver device, or a transceiver circuit, etc., which is configured to implement a transceiver function. The transceiver 805 may include a receiver and a sender. The receiver may be referred to as a receiver device or a receiver circuit, etc., which is configured to implement a receiving function. The sender may be referred to as a sender device or a sender circuit, etc., which is configured to implement a sending function.

Optionally, the communication apparatus 800 may further include one or more interface circuits 807. The interface circuit 807 is configured to receive and transmit code instructions to the processor 801. And the processor 801 runs the code instructions to cause the communication apparatus 800 to implement the method described in the above embodiments of the present disclosure.

If the communication apparatus 800 is a remote terminal device, the processor 801 is configured to implement the step 302, the step 303, etc., in the FIG. 3.

If the communication apparatus 800 is a relay terminal device, the transceiver 805 is configured to implement the step 501 in the FIG. 5.

If the communication apparatus 800 is a network device, the transceiver 805 is configured to implement the step 601 in the FIG. 6.

In an implementation, the processor 801 may include a transceiver that is configured to implement receive and send functions. For example, the transceiver may be a transceiver circuit, or an interface, or an interface circuit. The transceiver circuit, or the interface, or the interface circuit that is configured to implement receive and send functions may be separate, or may be integrated together. The transceiver circuit, or the interface, or the interface circuit may be configured to read or write code/data. Or, the transceiver circuit, or the interface, or the interface circuit may be configured to transmit or deliver a signal.

In an implementation, the processor 801 may include a computer program 803, which when executed on the processor 801, causes the communication apparatus to perform the method described in the above embodiments of the present disclosure. If the computer program 803 is solidified in the processor 801, the processor 801 may be implemented by a hardware.

In an implementation, the communication apparatus 800 may include a circuitry, in which the circuitry may implement the functions of sending or receiving or communicating in the method described in the above embodiments of the present disclosure. The processors and transceivers described in the present disclosure may be implemented on an integrated circuit (IC), an analog IC, a radio frequency integrated circuit (RFIC), a mixed signal IC, an application specific integrated circuit (ASIC), a printed circuit board(PCB), an electronic device, etc. And the processors and transceivers may be manufactured using various IC process technologies, such as a complementary metal oxide semiconductor (CMOS), an nMetal-oxide-semiconductor (NMOS), a P-type metal oxide semiconductor (positive channel metal oxide semiconductor, NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus described in the above embodiments of the present disclosure may be a network device or an access network device (e.g., a terminal device described in the above embodiments of the present disclosure). The scope of the communication apparatus described in present disclosure is not limited, and the structure of the communication apparatus may not be limited by the FIG. 8. The communication apparatus may be a separate device or may be part of a larger device. For example, the communication apparatus may be any of the following.
(1) A separate integrated circuit (IC), or a chip, or, a chip system or subsystem.
(2) A collection with one or more ICs. Optionally, the collection of ICs may also include a storage component for storing data and a computer program.
(3) An ASIC, such as a modem.
(4) A module that can be embedded in other devices.
(5) A device such as a receiver, a terminal device, an intelligent terminal device, a cellular telephone, a wireless device, a handheld device, a mobile unit, an invehicle device, a network device, a cloud device, an artificial intelligence device, etc.
(6) Other available devices.

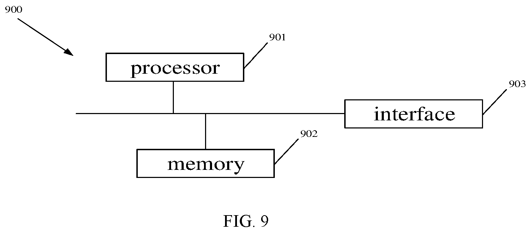

The communication apparatus may be a chip or a chip system, as shown in FIG. 9, it is a structure diagram illustrating a chip according to an embodiment of the present disclosure. The chip shown in FIG. 9 may include one or more processors 901 and a plurality of interfaces 903.

If the chip is configured to implement a function of a remote terminal device in an embodiment of the present disclosure, the interface 903 is configured to implement the step 201 in FIG. 2; the step 301 in FIG. 3; etc.

If the chip is configured to implement a function of a relay terminal device in an embodiment of the present disclosure, the interface 903 is configured to implement the step 501 in FIG. 5.

If the chip is configured to implement a function of a network device in an embodiment of the present disclosure, the interface 903 is configured to implement the step 601 in FIG. 6.

Optionally, the chip may also include a memory 903, which is configured to store the necessary computer programs and data.

Those skilled in the art may also understand that the various illustrative logical blocks and steps set forth in embodiments of the present disclosure may be implemented by an electronic hardware, a computer software, or a combination of both. Such functionality is implemented through hardware or software depending on the particular application and overall system design requirements. Those skilled in the art may, for each particular application, may use various methods to implement the described functionality, but such implementations should not be construed as being outside the scope of protection of the embodiments of the present disclosure.

A computer-readable storage medium is also provided in the present disclosure. The computer-readable storage medium stores instructions, when the instructions are executed by a computer, the function of any of the method descried in the above embodiments is implemented.

A computer program product is also provided in the present disclosure, when the computer program product is executed by a computer, the function of any of the method descried in the above embodiments is implemented.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another through wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

It may be understood that "several" mentioned in the disclosure may refer to one or more, and "plurality" or "multiple" may refer to two or more. The term "and/or" may describe association relationships of associated objects, indicating that there may be three types of relationships, for example, A and/or B, which may mean: A exists alone, A and B exist at the same time, and B exists alone. The character "/" generally indicates that the associated objects before and after are in an "or" relationship. And the singular forms "a", "said" and "the" are also intended to include the plural forms unless the context clearly dictates otherwise.

It may be further understood that although operations are described in a specific order in the drawings according to the embodiments of the disclosure, it should not be understood as requiring that these operations be performed in the specific order illustrated or in a serial order, or that perform all operations illustrated to obtain the desired result. In certain circumstances, multitasking and parallel processing may be advantageous.

Those skilled in the art may understand that various numbers such as first and second involved in present disclosure are distinguished merely for convenience of description, and are not intended to limit the scope of embodiments of the disclosure, but also to indicate an order of precedence.

The phase "at least one" in the present disclosure may also be described as one or more, and the phase "a plurality of' may refer to two, three, and four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

The term "predefined" in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, a specific working process of a system, an apparatus and a unit described above may refer to a corresponding process in the above method embodiments, which will not be repeated here.

Other implementations of the embodiments of the disclosure will be readily apparent to those skilled in the art from consideration of the specification and practice of the disclosure disclosed herein. This application is intended to cover any modification, use or adaptation of the embodiments of the present disclosure, these modifications, uses or adaptations follow the general principles of the embodiments of the present disclosure and include those in the technical field not disclosed by the embodiments of the present disclosure Common knowledge or common technical means. The specification and examples are to be considered exemplary only, with a true scope and spirit of the embodiments of the disclosure being indicated by the following claims.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for requesting system information, performed by a remote terminal device, comprising:
sending a system information request message in response to no valid system information being stored in the remote terminal device, wherein the system information request message carries a requested system information identifier.

2. The method according to claim 1, wherein sending the system information request message comprises:
sending a radio resource control (RRC) message for requesting the system information to a network device in response to a prohibit timer being not running and the network device configures a first configuration, wherein the first configuration is an on-demand system information request configuration; and
starting the prohibit timer.

3. The method according to claim 2, further comprising:
receiving an RRC reconfiguration message sent by the network device, wherein the RRC reconfiguration message carries the first configuration.

4. The method according to claim 2 or 3, further comprising:
receiving, in an RRC reconfiguration message, system information corresponding to the requested system information identifier, stopping the prohibit timer; or
receiving, in a system broadcast message, system information corresponding to the requested system information identifier, stopping the prohibit timer; or
receiving, in a sidelink RRC message, system information corresponding to the requested system information identifier, stopping the prohibit timer.

5. The method according to any one of claims 1-4, wherein sending the system information request message comprises:
sending a sidelink RRC message for requesting the system information to a relay terminal device, in a case that a network device does not configure the first configuration.

6. A method for requesting system information, performed by a relay terminal device, comprising:
receiving a system information request message sent by a remote terminal device, wherein the system information request message carries a requested system information identifier.

7. The method according to claim 6, further comprising:
sending obtained system information corresponding to the requested system information identifier to the remote terminal device through a sidelink RRC message.

8. A method for requesting system information, performed by a network device, comprising:
receiving a system information request message sent by a remote terminal device, wherein the system information request message carries a requested system information identifier.

9. The method according to claim 8, further comprising:
sending a radio resource control (RRC) reconfiguration message to the remote terminal device, wherein the RRC reconfiguration message carries a first configuration for requesting the system information.

10. The method according to claim 8 or 9, further comprising:
sending system information corresponding to the requested system information identifier to the remote terminal device through an RRC reconfiguration message; or
broadcasting system information corresponding to the requested system information identifier through a broadcast message.

11. A communication apparatus, comprising:
a transceiver module, configured to send a system information request message, wherein the system information request message carries a requested system information identifier of a terminal device, and no valid system information is stored in the terminal device.

12. The communication apparatus according to claim 11, wherein
the transceiver module is configured to send a radio resource control (RRC) message for requesting the system information to a network device in response to a prohibit timer being not running and the network device configuring a first configuration, wherein the first configuration is an on-demand system information request configuration;
wherein the communication apparatus further comprises a processing module, configured to start the prohibit timer.

13. The communication apparatus according to claim 12, wherein the transceiver module is further configured to:
receive an RRC reconfiguration message sent by the network device, wherein the RRC reconfiguration message carries the first configuration.

14. The communication apparatus according to claim 12 or 13, wherein the processing module is further configured to:
receive, in an RRC reconfiguration message, system information corresponding to the requested system information identifier, stop the prohibit timer; or
receive, in a system broadcast message, system information corresponding to the requested system information identifier, stop the prohibit timer; or
receive, in a sidelink RRC message, system information corresponding to the requested system information identifier, stop the prohibit timer.

15. The communication apparatus according to any one of claims 10-14, wherein the transceiver module is configured to:
send a sidelink RRC message for requesting the system information to a relay terminal device in a case that the network device does not configure the first configuration.

16. A communication apparatus, comprising:
a transceiver module, configured to receive a system information request message sent by a remote terminal device, wherein the system information request message carries a requested system information identifier.

17. The communication apparatus according to claim 16, wherein the transceiver module is further configured to:
send obtained system information corresponding to the requested system information identifier to the remote terminal device through a sidelink RRC message.

18. A communication apparatus, comprising:
a transceiver module, configured to receive a system information request message sent by a remote terminal device, wherein the system information request message carries a requested system information identifier.

19. The communication apparatus according to claim 18, wherein the transceiver module is further configured to:
send a radio resource control (RRC) reconfiguration message to the remote terminal device, wherein the RRC reconfiguration message carries a first configuration for requesting the system information.

20. The communication apparatus according to claim 18 or 19, wherein the transceiver module is further configured to:
send system information corresponding to the requested system information identifier to the remote terminal device through an RRC reconfiguration message; or,
broadcast system information corresponding to the requested system information identifier through a broadcast message.

21. A communication apparatus, comprising a processor and a memory, wherein the memory stores a computer program, and the processor executes the computer program stored in the memory, to cause the apparatus to perform the method of any one of claims 1 to 5, or the method of any one of claims 6 to 7, or the method of any one of claims 8 to 10.

22. A computer-readable storage medium, configured to store instructions, wherein when the instructions are executed, the method of any one of claims 1 to 5 is implemented, or the method of any one of claims 6 to 7 is implemented, or the method of any one of claims 8 to 10 is implemented.
